# EUROPEAN PATENT SPECIFICATION

(11) **EP 1 777 034 B1**
(45) Date of publication and mention of the grant of the patent: **03.09.2008**
(21) Application number: 06012126.6
(22) Date of filing: 13.06.2006
(51) Int. Cl.: B23Q 17/22, G05B 23/02

(54) **Detachable indicator device for feeding machine**
Abnehmbare Anzeigevorrichtung für eine Zuführvorrichtung von Stangen
Indicateur détachable pour un dispositif d'avance

(30) Priority: 11.10.2005 CN 200520128019
(43) Date of publication of application: 25.04.2007
(73) Proprietor: Barload Machine Co.,Ltd., Changhua City Chang hua County 500 (TW)
(72) Inventor: Yu, Shih-Pin, Changhua County 500 (TW)
(74) Representative: Becker Kurig Straus

(56) References cited:
- US-A- 3 944 799
- US-A- 4 157 231
- US-A- 4 379 415
- US-A- 4 396 976
- US-A- 4 835 468
- US-A- 4 998 455

## Description

### BACKGROUND OF THE INVENTION

### 1. Field of the Invention

The present invention relates to an indicator device and more particularly, to an indicator device for use in a material feeding machine to indicate the feeding status of the material feeding machine.

### 2. Description of the Related Art

When using a computer numerically controlled (CNC) processing machine to perform a processing process, a material feeding machine may be used to feed the material, for example, a bar into the CNC processing machine for processing. The material feeding machine automatically feeds the material into the CNC processing machine for processing. This fully automatic processing process saves much labor.

A regular material feeding machine for use with a CNC processing machine is known comprising a machine base, a feeder tube adapted to carry the bar material to be processed, and a push rod mounted in the feeder tube and adapted to push the bar material out of the feeder tube into the CNC processing machine for processing. When the push rod of the material feeding machine is continuously pushing the bar material forwards, the operator cannot observe the feeding status of the bar material from the outside of the material feeding machine. If the material feeding machine fails or the push rod cannot push the bar material forwards, the operator cannot quickly find out the problem. When several feeding machines are operated at the same time, many operators are needed to keep normal operation of the feeding machines, thereby increasing much the labor cost.

An indicator device installed in a machine for indicating the operation status of the machine is disclosed in US-P-4,396,976. Said indicator device comprises status indicator lamp displays to indicate system modes and conditions as well as a numeric display, which may be used to identify the magnitude of system parameters.

### SUMMARY OF THE INVENTION

The present invention has been accomplished under the circumstances in view. It is one object of the main object of the present invention to provide an indicator device for use in a material feeding machine, which enables the user to directly and rapidly recognize the feeding status of the material in the material feeding machine.

To achieve this object of the present invention, the indicator device is installed in a material feeding machine for indicating the feeding status of the material feeding machine. The indicator device comprises a body, at least one circuit board, and a controller. The body is detachably mounted to the material feeding machine. The at least one circuit board is mounted in the body and each provided with at least one light emitting element. The controller is electrically connected to the at least one circuit board for controlling on/off status of the at least one light emitting element of the circuit board so as to provide a visual indication signal to the user subject to the feeding status of the material feeding machine.

The indicator device is characterized in that said body extends in direction substantially in parallel to the length of the push rod of the material feeding machine used for pushing a bar material, and that said body has a light-transmissive member corresponding in location to the at least one light emitting element of said at least one circuit board.

In a preferred embodiment of the present invention, the indicator device comprises a plurality of the circuit boards which are detachably electrically interconnected.

### BRIEF DESCRIPTION OF THE DRAWINGS

FIG 1 is a perspective view showing an indicator device used in a material feeding machine.
FIG 2 is an exploded view of FIG 1, showing the structure of the indicator device.
FIG 3 is a cross-sectional view of the indictor device according to the present invention.
FIG 4 is a schematic drawing showing an indication status of the indicator device before operation of the push rod of the material feeding machine.
FIG 5 is a schematic drawing showing another indication status of the indicator device during the operation of the push rod of the material feeding machine.
FIG 6 is a schematic drawing showing still another indication status of the indicator device where the bar material has been completely delivered into the automatic lathe.

### DETAILED DESCRIPTION OF THE INVENTION

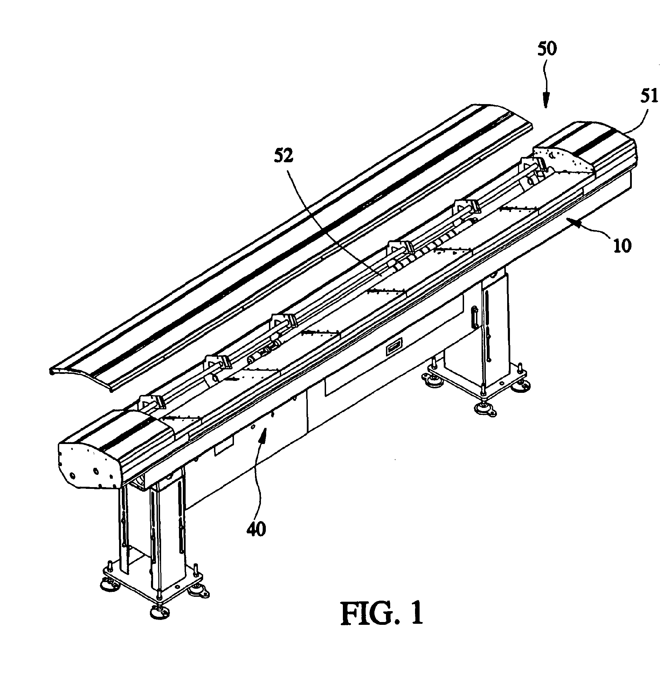

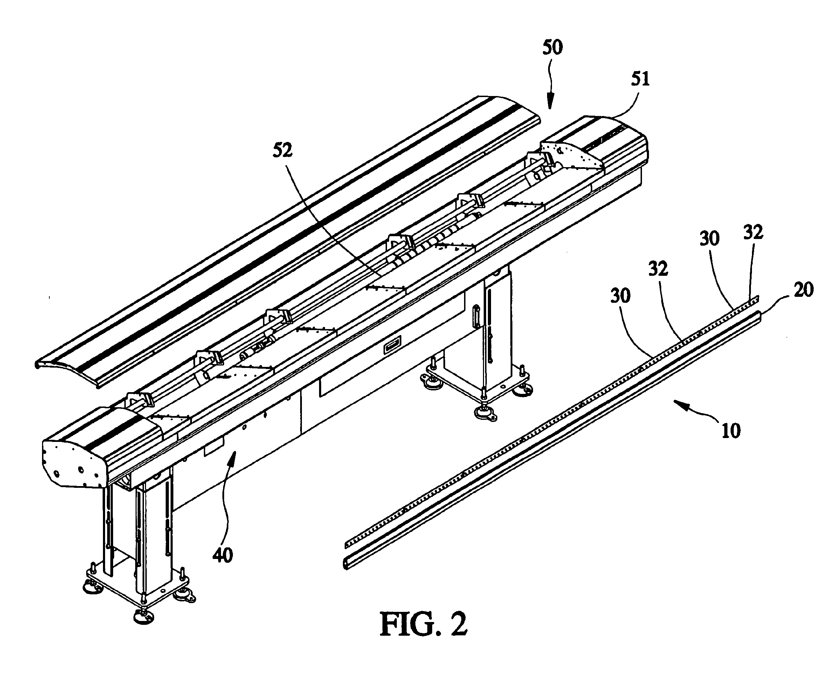

Referring to FIGS. 1-3, an indicator device **10** in accordance with the present invention is shown installed in a material feeding machine **50.** The material feeding machine **50** according to the present preferred embodiment is a bar feeder, which comprises a machine base **51,** and a push rod **52** mounted in the machine base **51.** The indicator device **10** comprises a body **20,** a plurality of circuit boards **30,** and a controller **40.**

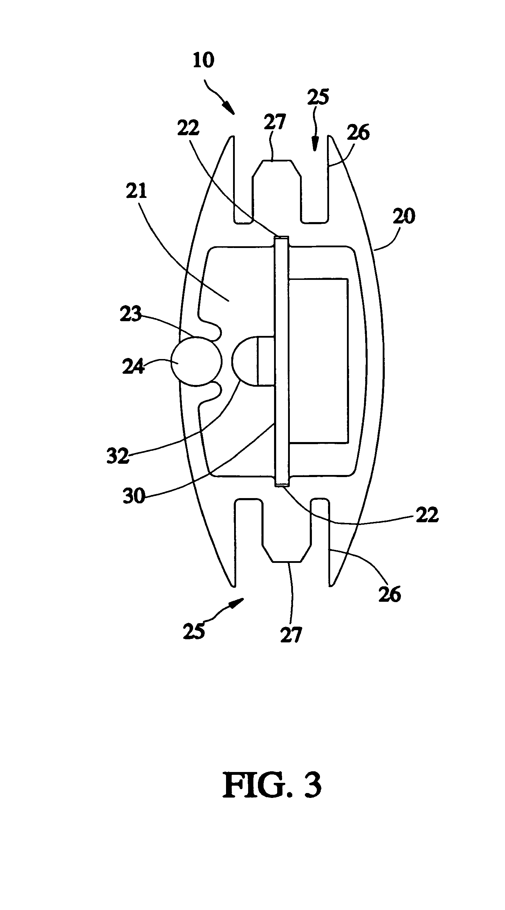

As shown in FIG 3, the body **20** is a narrow elongated member having an accommodation chamber **21** extending along the length, two mounting grooves **22** respectively disposed at the top and bottom sides inside the accommodation chamber **21,** a locating slot **23** disposed at the front side in communication with the accommodation chamber **21,** an acrylic light-transmissive member **24** fastened to the locating slot **23,** and two mounting portions **25** respectively disposed at the top and bottom sides outside the accommodation chamber **21.** Each mounting portion **25** has a recessed open chamber **26** and a rail **27** in the recessed open chamber **26.** By means of the mounting portions **25,** the body **20** is fastened to one lateral side of the machine base **51** and kept substantially in parallel to the push rod **52** with the light-transmissive member **24** facing toward the outside of the machine base **51.**

Referring to FIGS. 1-3 again, the circuit boards **30** each have a plurality of light emitting elements **32** arranged in a line. According to the present preferred embodiment, the light emitting elements **32** are light emitting diodes (LEDs). The circuit boards **30** are arranged together and electrically connected together, and configured subject to the profile of the material feeding machine **50.** The circuit boards **30** are mounted inside the accommodation chamber **21** of the body **20** and fastened to the mounting grooves **22,** keeping the LEDs **32** aimed at the light-transmissive member **24** so that the light of the LEDs **32** passes through the light-transmissive member **24** to the outside.

The controller **40** is mounted in the machine base **51** and electrically connected to the circuit boards **30** for controlling on/off status of the LEDs **32** subject to the operation status of the material feeding machine **50.**

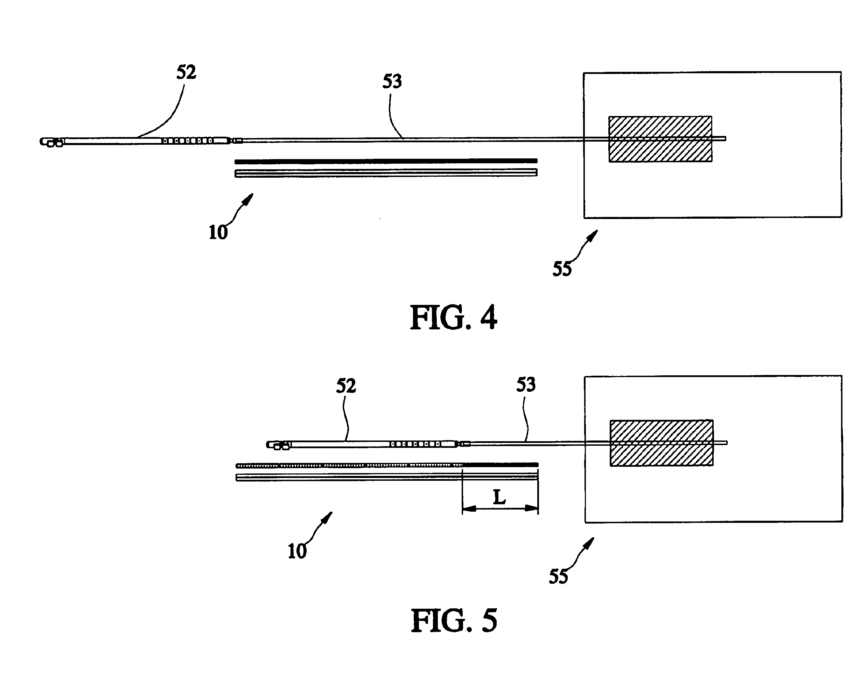

Referring to FIG 4, before operation of the push rod **52** of the material feeding machine **50** to push a bar material **53** into an automatic lathe **55,** the controller **40** drives the circuit boards **30** to turn on all the LEDs **32,** the length of the LEDs **32** that are all turned on is approximately equal to the length of the bar material **53.** By means of the indication of the light of the LEDs **32,** the user knows the length of the bar material **53** in the material feeding machine **50.** When the push rod **52** is pushing the bar material **53** into the automatic lathe **55,** the controller **40** controls on/off status of the LEDs **32** subject to the length of the bar material **53** that has been delivered into the automatic lathe **55** (see FIG. 5). Following the movement of the bar material **53** into the automatic lathe **55,** the number of the LEDs **32** that are turned on is relatively reduced (see the region referenced by **L** in FIG. 5). Therefore, the user recognizes the inserted length of the bar material **53** in the automatic lathe **55** subject to the range of the LEDs **32** that are turned on.

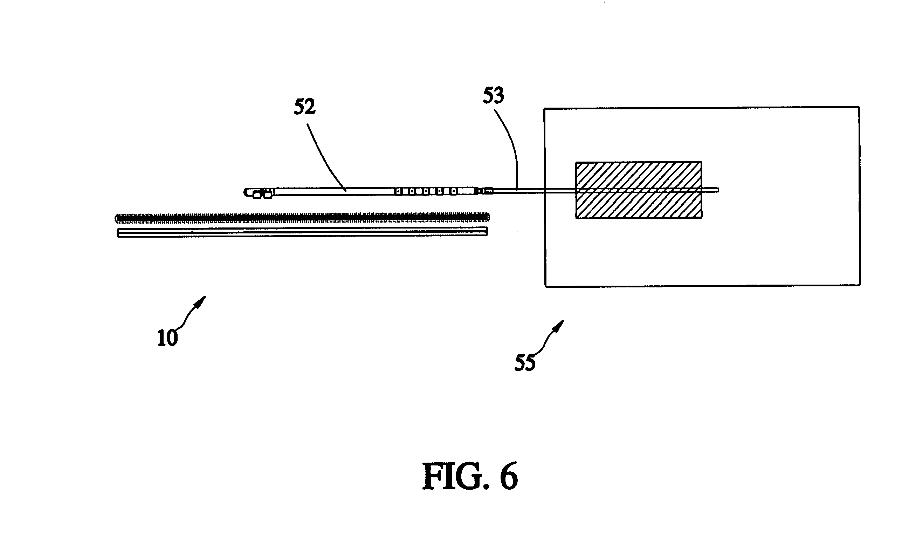

Referring to FIG 6, when the push rod **52** pushed the bar material **53** completely into the inside of the automatic lathe **55,** all the LEDs **32** are controlled to flash, imparting a visual signal to the user that the bar material **53** has been fully delivered into the automatic lathe 55. Further, when an abnormal condition occurred, for example, if the feeding of the bar material **53** is interrupted during the operation of the push rod **52** to push the bar material **53,** the LEDs **32** are controlled to flash subject to a predetermined flashing mode, giving a visual feeding failure signal to the user.

As indicted above, the invention controls a number of light emitting elements to provide a visual indication signal subject to the bar material feeding status of the material feeding machine during operation of the automatic lathe. Therefore, the user can know directly and rapidly the feeding status of the bar material in the material feeding machine.

In the aforesaid preferred embodiment of the present invention, the indicator device is horizontally mounted in one lateral side of the machine base of the material feeding machine. Alternatively, the indicator device can be hung above or on the material feeding machine, keeping the light emitting elements arranged in line in vertical direction. Further, the controller can be separately mounted in the floor and electrically connected to the circuit boards. Further, in addition to the light emitting elements, speaker means may be used and controlled by the controller to output an audio signal indicative of the feeding status of the bar material.

Although a particular embodiment of the invention has been described in detail for purposes of illustration, various modifications and enhancements may be made without departing from the scope of the invention. Accordingly, the invention is not to be limited except as by the appended claims.

## Claims

1. An indicator device (10) installed in a material feeding machine (50) having a push rod (52) for pushing a bar material (53), for indicating the feeding status of the material feeding machine (50), wherein the indicator device (10) comprises a body (20) detachably mounted to said material feeding machine (50), at least one circuit board (30) mounted in said body (20), wherein said at least one circuit board (30) each has at least one light emitting element (32), and a controller (40) electrically connected to said at least one circuit board (30) and for controlling on/off status of the at least one light emitting element (32) of said at least one circuit board (30) individually so as to provide a visual indication signal subject to the feeding status of said material feeding machine (50),
**characterized in that** said body (20) extends in direction substantially in parallel to the length of the push rod (52) of the material feeding machine (50) , and that said body (20) has a light-transmissive member (24) corresponding in location to the at least one light emitting element (32) of said at least one circuit board (30).

2. The indicator device (10) as claimed in claim 1, wherein said body (20) has an accommodation chamber (21), which accommodates said at least one circuit board (30).

3. The indicator device (10) as claimed in claim 2, wherein said body (20) has two mounting grooves (22) respectively provided at top and bottom sides of an inner wall that defines said accommodation chamber (21); said at least one circuit board (30) has two sides respectively received in the mounting grooves (22) inside said body (20).

4. The indicator device (10) as claimed in claim 2, wherein said body (20) has a locating slot (23) disposed at one side thereof in communication with said accommodation chamber (21), and a light-transmissive member (24) fastened to said locating slot (23).

5. The indicator device (10) as claimed in claim 1, wherein said body (20) has at least one mounting portion (25) each having a recessed open chamber (26) and a rail (27) disposed in said recessed open chamber (26) for fastening to said material feeding machine (50).

## Patentansprüche

1. Anzeigeneinrichtung (10), die in eine Materialzuführvorrichtung (50) mit einer Druckstange (52) zum Drücken eines Stabmaterials (53) eingebaut vorliegt, zum Anzeigen des Zuführstatus der Materialzuführvorrichtung (50), worin die Anzeigeneinrichtung (10) einen Körper (20) umfasst, der an die Materialzuführvorrichtung (50) abnehmbar angebracht ist, mindestens eine Platine (30), die in dem Körper (20) angebracht ist, worin die mindestens eine Platine (30) jeweils mindestens ein Licht emittierendes Element (32) aufweist, und eine Steuereinheit (40), die mit der mindestens einen Platine (30) elektrisch verbunden und zum individuellen Steuern des An/Aus Status des mindestens einen Licht emittierenden Elements (32) der mindestens einen Platine (30) vorgesehen ist, um so ein optisches Anzeigensignal bereitzustellen, das dem Zuführstatus der Materialzuführvorrichtung (50) unterworfen ist,
**dadurch gekennzeichnet, dass** sich der Körper (20) wesentlich parallel in die Richtung zu der Länge der Druckstange (52) der Materialzuführvorrichtung (50) erstreckt und dass der Körper (20) ein lichtdurchlässiges Element (24) aufweist, das in der Lage dem mindestens einen Licht emittierenden Element (32) der mindestens einen Platine (30) entspricht.

2. Anzeigeneinrichtung (10) nach Anspruch 1, worin der Körper (20) eine Aufnahmekammer (21) aufweist, die die mindestens eine Platine (30) aufnimmt.

3. Anzeigeneinrichtung (10) nach Anspruch 2, worin der Körper (20) zwei Montageauskehlungen (22) aufweist, die entsprechend an oberen und unteren Seiten einer Innenwand bereitgestellt sind, die die Aufnahmekammer (21) definiert, wobei die mindestens eine Platine (30) zwei Seiten aufweist, die entsprechend in den Montageauskehlungen (22) in dem Körper (20) aufgenommen werden.

4. Anzeigeneinrichtung (10) nach Anspruch 2, worin der Körper (20) einen Lokalisierungsschlitz (23) aufweist, der an einer Seite davon in Verbindung mit der Aufnahmekammer (21) angeordnet vorliegt, und ein lichtdurchlässiges Element (24), das an dem Lokalisierungsschlitz (23) angebracht ist.

5. Anzeigeneinrichtung (10) nach Anspruch 1, worin der Körper (20) mindestens einen Montagebereich (25) aufweist, der jeweils eine ausgesparte offene Kammer (26) und eine Schiene (27) aufweist, die in der ausgesparten offenen Kammer (26) zum Befestigen der Materialzuführvorrichtung (50) angeordnet vorliegt.

## Revendications

1. Un dispositif indicateur (10) installé dans une machine d'avancement de matière (50), comportant une tige de poussée (52) pour pousser une barre de matière (53), pour indiquer l'état d'avancement de la machine d'avancement de matière (50) dans lequel le dispositif indicateur (10) comprend un corps (20) monté détachable sur ladite machine d'avancement (50), au moins un circuit imprimé (30) monté à l'intérieur dudit corps (20) dans lequel chacun desdits au moins un circuit imprimé (30) comporte au moins un élément émetteur de lumière (32) et un contrôleur (40) connecté électriquement audit au moins un élément émetteur de lumière (32) pour contrôler individuellement l'état « on /off » du au moins un élément émetteur de lumière (32) dudit au moins un circuit imprimé (30) de sorte à fournir un signal d'indication visuelle dépendant de l'état d'avancement de la machine d'avancement de matière (50),
**caractérisé en ce que** ledit corps (20) s'étend en direction essentiellement parallèle à la longueur de la barre de poussée (52) de la machine d'avancement de matière (50) et que ledit corps (20) comporte un membre transmetteur de lumière (24) correspondant en localisation au au moins un élément émetteur de lumière (32) dudit au moins un circuit imprimé (30).

2. Le dispositif indicateur (10) tel que revendiqué dans la revendication 1 dans lequel ledit corps (20) comporte une chambre de logement (21) qui loge ledit au moins un circuit imprimé (30).

3. Le dispositif indicateur (10) tel que revendiqué dans la revendication 2 dans lequel ledit corps (20) comporte deux gorges de montage (22) disposées respectivement aux côtés supérieur et inférieur d'une paroi interne qui définit ladite chambre d'accueil (21), ledit au moins un circuit imprimé (30) comportant deux côtés respectivement logés dans les gorges de montage (22) à l'intérieur dudit corps (20).

4. Le dispositif indicateur (10) tel que revendiqué dans la revendication 2 dans lequel ledit corps (20) comporte une rainure de localisation (23) disposée sur l'un des côtés de ce dernier en communication avec ladite chambre d'accueil (21) et un membre transmetteur de lumière (24) fixé à ladite rainure de localisation (23).

5. Le dispositif indicateur (10) tel que revendiqué dans la revendication 1 dans lequel ledit corps (20) comporte au moins une portion de montage (25) chacune comportant une chambre ouverte encastrée (26) et un rail (27) disposés dans ladite chambre ouverte encastrée (26) pour se fixer à ladite machine d'avancement de matière (50).
